# EUROPÄISCHE PATENTSCHRIFT

(11) **EP 2 471 131 B1**
(45) Veröffentlichungstag und Bekanntmachung des Hinweises auf die Patenterteilung: **13.11.2013**
(21) Anmeldenummer: 10732358.6
(22) Anmeldetag: 12.07.2010
(51) Int. Cl.: H01M 4/06, H01M 4/66, H01M 6/08

(54) **ELEKTROCHEMISCHES ELEMENT MIT REDUZIERTEM INNENWIDERSTAND**
ELECTROCHEMICAL ELEMENT WITH A REDUCED INTERNAL RESISTANCE
ÉLÉMENT ÉLECTROCHIMIQUE AYANT UNE RÉSISTANCE INTERNE RÉDUITE

(30) Priorität: 26.08.2009 DE 102009039945
(43) Veröffentlichungstag der Anmeldung: 04.07.2012
(73) Patentinhaber: VARTA Microbattery GmbH, 73479 Ellwangen (DE)
(72) Erfinder: LINDNER, Hans Jürgen, 73479 Ellwangen (DE); FISCHER, Claus Christian, 73479 Ellwangen (DE); WAGNER, Horst, 73494 Rosenberg (DE)
(74) Vertreter: Patentanwälte Ruff, Wilhelm, Beier, Dauster & Partner
(86) Internationale Anmeldenummer: PCT/EP2010/059959
(87) Internationale Veröffentlichungsnummer: WO 2011/023447

(56) Entgegenhaltungen:
- WO-A2-01/97302
- WO-A2-02/084766

## Beschreibung

Die vorliegende Erfindung betrifft ein elektrochemisches Element mit einem Gehäuse, zwei Elektroden, von denen eine an der Innenseite des Gehäuses anliegt und einen Hohlraum definiert, in dem die andere angeordnet ist, sowie einem zwischen den Elektroden angeordneten Separator.

Bei Zellen dieser Bauart handelt es sich häufig um sogenannte Alkali-Mangan-Batterien, also um Zellen mit einer positiven Elektrode aus Mangandioxid (MnO₂) und einer negativen Elektrode aus Zink sowie einem alkalischen Elektrolyten, letzterer insbesondere auf Basis von Kaliumhydroxid (KOH). In der Regel ist die positive Elektrode als Hohlzylinder ausgebildet, dessen Außenseite die Innenseite eines becherförmigen Zellengehäuses kontaktiert. Im Inneren der positiven Elektrode ist die negative Elektrode angeordnet und außerdem ein Separator, um die positive Elektrode physikalisch von der negativen Elektrode zu trennen und dabei einen Ionentransport zwischen den beiden Elektroden zuzulassen.

Die negative Elektrode wird in der Regel ausgebildet, indem die aktive Zinkmasse in Form eines Zinklegierungspulvers mit dem alkalischen Elektrolyten und einem Geliermittel vermischt wird. Das Gemisch wird in dem im Inneren der positiven Elektrode ausgebildeten Hohlraum verteilt, bzw. der Hohlraum wird mit dem Gemisch befüllt. Anschließend wird eine Kollektorenbaugruppe in das offenen Ende des becherförmigen Zellengehäuses eingesetzt. Die negative Elektrode wird dabei bevorzugt über einen stiftförmigen Kollektor kontaktiert, der beim Einsetzen der Kollektorbaugruppe in den Hohlraum bzw. in die sich darin befindliche negative Elektrode gepresst wird. Abschließend wird das Zellengehäuse verschlossen, in der Regel durch Einbringen einer Abdeckung, die über der Kollektorbaugruppe angebracht wird. Um die Zelle abzudichten, können die Wände des Zellengehäuses über diese Abdeckung umgefalzt werden.

Insbesondere aus produktionstechnischen Gründen wird die als Hohlzylinder ausgebildete positive Elektrode in aller Regel nicht einstückig in das becherförmige Zellengehäuse eingebracht, sondern in Form von einzelnen Segmenten, die zusammengesetzt dann die positive Elektrode bilden. Beispielsweise kann ein scheibenförmiges Segment in ein zylindrisches becherförmiges Zellengehäuse eingelegt werden, auf das anschließend mehrere ringförmige Segmente gestapelt werden. Der Innendurchmesser der ringförmigen Segmente bestimmt dann das Volumen und den Durchmesser des Hohlraums für die negative Elektrode. Die Außendurchmesser sowohl des scheibenförmigen als auch der ringförmigen Segmente sind in der Regel exakt auf den entsprechenden Innendurchmesser des becherförmigen Zellengehäuses abgestimmt.

Naturgemäß haben elektrochemische Zellen der beschriebenen Bauart eine sehr hohe Kapazität. Gemein ist ihnen auf der anderen Seite aber auch ein relativ hoher Innenwiderstand, woraus schlechte Entladeeigenschaften resultieren können. Insbesondere für pulsförmige Entladeprofile und für Entladungen unter hohen Stromdichten sind die beschriebenen Zellen nicht optimal ausgelegt, weswegen sie für viele Anwendungszwecke nicht oder nur bedingt geeignet sind.

Die WO 01/97302 A2 befasst sich damit, die Strombelastbarkeit von Al-kali-Mangan-Batterien zu verbessern. Dies soll dadurch erreicht werden, dass die Kathoden in einer sehr speziellen Geometrie ausgebildet sind, sie weisen nämlich zum Innenhohlraum hin längliche Ausbuchtungen auf, welche den Zweck haben, die Kontaktflächen zwischen Anode und Kathode zu vergrößern. Zusätzlich können zwischen einzelnen Kathodensegmenten als Kathodenstromkollektoren ring- oder scheibenartige Verbindungsstücke angeordnet sein.

Aus der WO 02/084766 ist es bekannt, eine Schicht eines leitfähigen Materials zwischen eine innerhalb eines Gehäuses angeordnete hohlzylinderförmige positive Elektrode und die Innenwand des Gehäuses einzubringen. Bevorzugt handelt es sich bei dem Material um Ruß.

Der vorliegenden Erfindung lag die Aufgabe zugrunde, die Entladeeigenschaften der eingangs erwähnten gattungsgemäßen elektrochemischen Elemente zu verbessern und so ihr potenzielles Anwendungsspektrum zu erweitern.

Diese Aufgabe wird gelöst durch das elektrochemische Element mit den Merkmalen des Anspruchs 1. Bevorzugte Ausführungsformen des erfindungsgemäßen elektrochemischen Elements finden sich in den abhängigen Ansprüchen 2 bis 13. Der Wortlaut sämtlicher Ansprüche wird hiermit mit durch Bezugnahme zum Inhalt dieser Beschreibung gemacht.

Ein erfindungsgemäßes elektrochemisches Element umfasst wie die eingangs beschriebenen gattungsgemäßen elektrochemischen Elemente stets ein Gehäuse mit einer Innenseite, eine an der Innenseite des Gehäuses anliegende erste Elektrode, die zugleich einen Hohlraum definiert und eine zweite Elektrode entgegengesetzter Polarität, die innerhalb dieses Hohlraums angeordnet ist. Daneben weist ein erfindungsgemäßes elektrochemisches Element stets einen Separator auf, der zwischen der ersten und der zweiten Elektrode angeordnet ist.

Die erste Elektrode setzt sich dabei zumindest aus mindestens zwei, vorzugsweise aus drei oder mehr Einzelsegmenten zusammen. Diese grenzen zum einen über erste Kontaktflächen flächig aneinander und liegen zum anderen über weitere Kontaktflächen flächig an der Innenseite des Gehäuses an.

Die zweite Elektrode füllt den Hohlraum im Inneren der ersten Elektrode in der Regel im wesentlich vollständig aus. Ihre Kontaktierung kann beispielsweise über einen stiftförmigen Kollektor erfolgen, wie er eingangs beschrieben wurde.

Besonders zeichnet sich das erfindungsgemäße elektrochemische Element dadurch aus, dass zwischen den ersten Kontaktflächen der mindestens zwei Einzelsegmente, über die die Einzelsegmente flächig aneinandergrenzen, mindestens ein Verbindungsmittel angeordnet ist, das die Segmente elektrisch leitend verbindet.

Überraschenderweise wurde festgestellt, das durch die Anordnung eines solchen mindestens einen Verbindungsmittels zwischen den Segmenten der Innenwiderstand von elektrochemischen Elementen der oben beschriebenen Bauart drastisch reduziert werden konnte. Teilweise konnten Rückgänge des Innenwiderstandes um deutlich mehr als die Hälfte gemessen werden, was sich natürlich positiv auf das potenzielle Anwendungsspektrum des erfindungsgemäßen elektrochemischen Elements auswirkt. Dieses eignet sich besser als vergleichbare, aus dem Stand der Technik bekannte elektrochemische Elemente auch für Anwendungen, bei denen die erwähnten anspruchsvollen pulsförmigen Entladeprofile auftreten bzw. für Entladungen unter hohen Stromdichten.

Bevorzugt handelt es sich bei einem erfindungsgemäßen elektrochemischen Element um eine handelsübliche Batterie. Das Gehäuse eines elektrochemischen Elementes ist vorzugsweise im Wesentlichen zylindrisch ausgebildet. Besonders bevorzugt weist Gehäuse eines erfindungsgemäßen elektrochemischen Element eine genormte Größe wie zum Beispiel AA (Mignon), AAA (Micro), C (Baby) oder D (Mono) auf.

Wie bei aus dem Stand der Technik bekannten Elementen ist auch bei einem erfindungsgemäßen elektrochemischen Element bevorzugt zumindest ein Teil des ersten Elektrode, gegebenenfalls auch die ganze erste Elektrode, als Hohlzylinder ausgebildet. Dazu kann die erste Elektrode beispielsweise ein scheibenförmiges und ein oder mehrere ringförmige Einzelsegmente mit vorzugsweise jeweils gleichem Außendurchmesser umfassen. Legt man z.B. das scheibenförmige Einzelsegment in den Boden eines becherartigen, im Wesentlichen zylindrisch ausgebildeten Gehäuses ein und stapelt darauf ein oder mehrere der ringförmigen Einzelsegmente, so erhält man - einen passenden Außendurchmesser der ringförmigen Segmente vorausgesetzt - die erwähnte an der Innenseite des Gehäuses anliegende erste Elektrode mitsamt dem Hohlraum, in dem die zweite Elektrode angeordnet ist. Das Volumen bzw. die Dimensionen des Hohlraums werden dabei durch die Dimensionen und die Anzahl der ringförmigen Einzelsegmente (insbesondere durch deren Innendurchmesser) bestimmt.

Bevorzugt umfasst ein erfindungsgemäßes elektrochemisches Element zwei oder mehr der bereits erwähnten ringförmigen Einzelsegmente mit jeweils gleichem Außen- und Innendurchmesser. Besonders bevorzugt weist es eine erste Elektrode auf, die aus diesen zwei oder mehr ringförmigen Einzelsegmenten besteht. Bevorzugt ist dann jeweils zwischen benachbarten Segmenten das mindestens eine Verbindungsmittel angeordnet, so dass benachbarte Segmente über das mindestens eine Verbindungsmittel jeweils leitend miteinander verbunden sind.

Der als Hohlzylinder ausgebildete Teil der ersten Elektrode oder die erste Elektrode als Ganzes bestehen entsprechend besonders bevorzugt aus mehreren gestapelt vorliegenden ringförmigen Einzelsegmenten mit jeweils gleichem Außen- und Innendurchmesser. Konsequenterweise ist es auch bevorzugt, dass der Hohlraum innerhalb der ersten Elektrode, der ja durch die gestapelt vorliegenden Einzelsegmente gebildet wird, im Wesentlichen zylindrisch ausgebildet ist.

Die ringförmigen Einzelsegmente weisen bevorzugt eine im Vergleich zu ihrem Außendurchmesser nur geringe Höhe auf. Bei den Kontaktflächen, in denen die Einzelsegmente flächig aneinander grenzen, handelt es sich bevorzugt um die Stirnseiten der Segmente. Die Größe der Kontaktflächen wird entsprechend bevorzugt durch die Außen- und Innendurchmesser der ringförmigen Einzelsegmente definiert.

Als Verbindungsmittel umfasst ein erfindungsgemäßes elektrochemisches Element bevorzugt ein Verbindungsmittel aus einem Material, das eine höhere elektrische Leitfähigkeit aufweist als das Material, aus dem die erste Elektrode besteht. Besonders geeignet sind Verbindungsmittel aus Metall, insbesondere aus einer Metallfolie oder einem Metallblech.

Erfindungsgemäß erstreckt sich das mindestens eine Verbindungsmittel nicht nur auf den Bereich zwischen den Kontaktflächen der Segmente der ersten Elektrode eines erfindungsgemäßen elektrochemischen Elements. Stattdessen erstreckt es sich bis in den Kontaktbereich zwischen den weiteren Kontaktflächen der Segmente und der Innenseite des Gehäuses und verbindet somit die Segmente nicht nur untereinander elektrisch leitend, sondern auch mit dem Gehäuse.

An dieser Stelle sei noch einmal klargestellt, dass natürlich auch in den eingangs erwähnten, aus dem Stand der Technik bereits bekannten elektrochemischen Elementen elektrische Verbindungen zwischen der Innenseite des Gehäuses und der an der Innenseite anliegenden Elektrode sowie zwischen einzelnen Segmenten der positiven Elektrode bestehen. Der Einsatz des mindestens einen Verbindungsmittels gemäß der vorliegenden Erfindung verbessert jedoch die elektrische Leitung zwischen diesen Komponenten in einem Ausmaß, der so für den Fachmann nicht absehbar war. Durch eine für sich gesehen sehr einfache technische Maßnahme, das Einbringen eines Verbindungsmittels zwischen zwei in Kontakt stehende, an sich schon elektrisch leitfähige Bauteile eines elektrochemischen Elements, wird somit eine technischer Effekt mit erheblichen positiven Auswirkungen erzielt.

Das mindestens eine Verbindungsmittel ist ringförmig ausgebildet, insbesondere entspricht sein Außen- und/oder Innendurchmesser bevorzugt dem Außen- und/oder Innendurchmesser der verwendeten ringförmigen Einzelsegmente. Es füllt somit den Kontaktbereich zwischen den Einzelsegment in bevorzugten Ausführungsformen optimal aus. Weiterhin umfasst es mindestens einen vorzugsweise streifenförmigen Fortsatz, der an der Außenseite des Ringes angeformt ist.

Bei der ersten Elektrode eines erfindungsgemäßen elektrochemischen Elements handelt es sich bevorzugt um die positive Elektrode. Entsprechend handelt es sich bei der zweiten Elektrode eines erfindungsgemäßen elektrochemischen Elements bevorzugt um die negative Elektrode.

Besonders bevorzugt handelt es sich bei der positiven Elektrode um eine Mangandioxidelektrode. Bei der negativen Elektrode handelt es sich besonders bevorzugt um eine Zinkelektrode. Entsprechend ist das erfindungsgemäße elektrochemische Element insbesondere eine Alkali-Mangan-Zelle. Als solche weist es natürlich bevorzugt auch einen entsprechenden alkalischen Elektrolyten auf.

Die beschriebenen sowie weitere Merkmale des erfindungsgemäßen elektrochemischen Elements ergeben sich auch aus der nun folgenden Beschreibung der in den Zeichnungen dargestellten bevorzugten Ausführungsformen in Verbindung mit den Unteransprüchen. Die beschriebenen Ausführungsformen dienen lediglich zur Erläuterung und zum besseren Verstehen der Erfindung und sind in keiner Weise einschränkend zu verstehen.

### Figurenbeschreibung

- Fig. 1: zeigt eine schematische Ansicht einer Ausführungsform eines erfindungsgemäßen elektrochemischen Elements.
- Fig. 2: zeigt eine bevorzugte Ausführungsform eines Verbindungsmittels zum elektrischen Kontaktieren von Einzelsegmenten der ersten Elektrode.

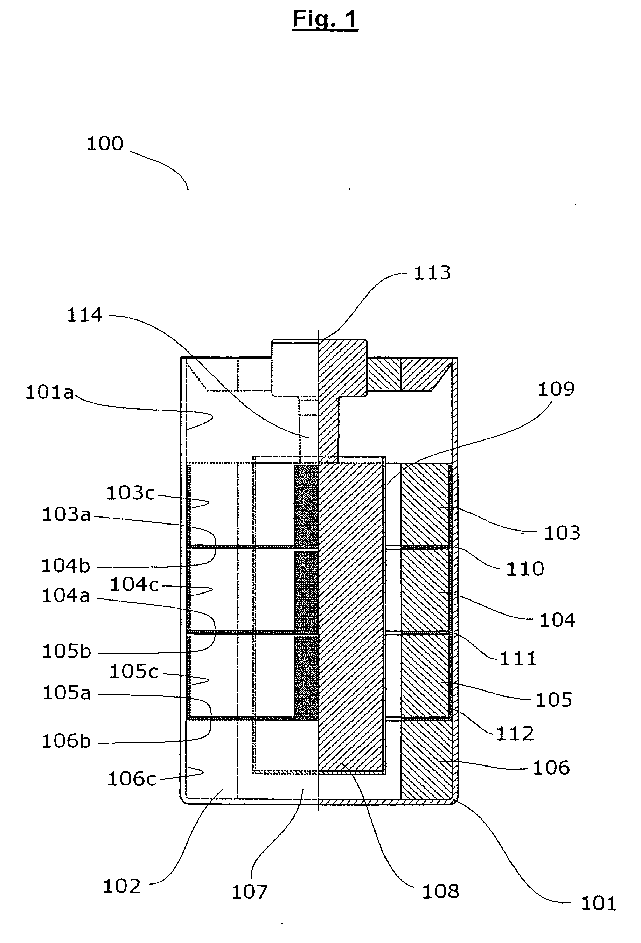

In **Fig. 1** ist eine bevorzugte Ausführungsform eines erfindungsgemäßen elektrochemischen Elements **100** schematisch dargestellt. Das elektrochemische Element **100** ist dabei teils im Querschnitt (rechts), teils in einer ungeschnittenen Ansicht mit dargestellten verdeckten Kanten (links) dargestellt. Es weist zum einen ein becherförmiges Gehäuse **101** mit einem im Wesentlichen zylindrischen Mantel und einem im Wesentlichen ebenen, kreisförmig ausgebildeten Bodenbereich auf. An der Innenseite **101a** des Gehäuses liegt die als Hohlzylinder ausgebildete erste Elektrode **102** an, die aus den Einzelsegmenten **103, 104, 105** und **106** zusammengesetzt ist. Diese Einzelsegmente sind jeweils ringförmig ausgebildet und weisen einen jeweils identischen Außen- und Innendurchmesser auf. Innerhalb des Gehäuses **101** sind sie stapelförmig angeordnet und definieren in ihrem Zentrum den Hohlraum **107.** In diesem ist die negative Elektrode **108** angeordnet, die wiederum von einem becherförmigen Separator **109** umgeben ist, der die Elektroden **102** und **108** voneinander trennt. Die erwähnten Einzelsegmente **103, 104, 105** und **106** grenzen über erste Kontaktflächen **103a, 104b, 104a, 105b, 105a** und **106b** (die jeweiligen Stirnseiten benachbarter Segmente) flächig aneinander. Über weitere Kontaktflächen **103c, 104c, 105c** und **106c** (die jeweiligen Mantelflächen der ringförmigen Einzelsegmente **103, 104, 105** und **106)** grenzen sie flächig an der Innenseite **101a** des Gehäuses **101** an. Zwischen den ersten Kontaktflächen **103a** und **104b, 104a** und **105b** sowie **105a** und **106b** ist dabei jeweils ein Verbindungsmittel **(110, 111** und **112)** angeordnet, das die Segmente **103, 104, 105** und **106** elektrisch leitend verbindet. Dieses Verbindungsmittel deckt allerdings nicht nur den Bereich zwischen den ersten Kontaktflächen **103a, 104b, 104a, 105b, 105a** und **106b** ab, sondern es erstreckt sich bis in den Kontaktbereich zwischen den weiteren Kontaktflächen **103c, 104c** und **105c** der entsprechenden Segmente und der Innenseite des Gehäuses **101** und verbindet damit sowohl die Einzelsegmente **103, 104, 105** und **106** untereinander als auch die Segmente **103, 104** und 105 mit dem Gehäuse **101.**

Das becherförmige Gehäuse **101** bildet somit einen Pol des elektrochemischen Elements **100** aus. Der andere Pol **113** findet sich an der offenen Seite des Gehäusebechers **101.** Von diesem ausgehend ragt der stiftförmige Ableiter **114** in den Hohlraum **107** im Inneren der ersten Elektrode **102** und kontaktiert dabei die darin angeordnete zweite Elektrode **108.** Über die Abdeckung **114,** die den Pol **113** gleichzeitig vom Gehäuse **101** isoliert, ist das offene Ende des Gehäusebechers **101** abgedichtet.

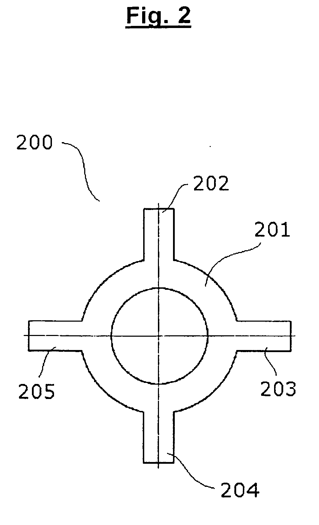

Bei dem in **Fig. 2** abgebildeten Verbindungsmittel **200** handelt es sich um eine ringförmig ausgebildete Metallfolie **201** mit vier streifenförmigen Fortsätzen **202, 203, 204** und **205.** Das Verbindungsmittel **200** entspricht in Form und Funktion den Verbindungsmitteln **110, 111** und **112,** die in dem in Fig. 1 dargestellten elektrochemischen Element **100** verbaut sind. Der Außen- und der Innendurchmesser des Ringes **201** entspricht dabei exakt dem Außen- und Innendurchmesser der in Fig. 1 dargestellten Einzelsegmente **103, 104, 105** und **106** der ersten Elektrode **108.** Wird ein solches Verbindungsmittel in ein becherförmiges Gehäuse **101,** wie in Fig. 1 dargestellt, flach eingelegt, so knicken die streifenförmigen Fortsätze **202, 203, 204** und **205** nach oben ab. Werden also drei solcher Verbindungsmittel, wie in Fig. 1 dargestellt, als Verbindungsmittel **110, 111** und **112** zwischen den Einzelsegmenten **103, 104, 105** und **106** angeordnet, so können die streifenförmigen Fortsätze **202, 203, 204** und **205** die erwähnte elektrisch leitende Verbindung zwischen den weiteren Kontaktflächen **103c, 104c** und **105c** der entsprechenden Segmente und der Innenseite **101a** des Gehäuses **101** bilden. Der ringförmige Teil **201** des Verbindungsmittels **200** verbindet dann dagegen die Segmente **103, 104, 105** und **106** untereinander.

## Patentansprüche

1. Elektrochemisches Element, umfassend
• ein Gehäuse mit einer Innenseite
• eine an der Innenseite des Gehäuses anliegende erste Elektrode, die einen Hohlraum definiert,
• eine zweite Elektrode entgegengesetzter Polarität, die innerhalb des Hohlraums angeordnet ist und
• einen zwischen der ersten und der zweiten Elektrode angeordneten Separator,
wobei sich die erste Elektrode aus mindestens zwei Einzelsegmenten zusammensetzt, die über erste Kontaktflächen flächig aneinandergrenzen und über weitere Kontaktflächen an der Innenseite des Gehäuses anliegen und wobei zwischen den ersten Kontaktflächen mindestens ein Verbindungsmittel angeordnet ist, das die Segmente untereinander elektrisch leitend verbindet und das sich bis in den Kontaktbereich zwischen den weiteren Kontaktflächen der Segmente und der Innenseite des Gehäuses erstreckt und die Segmente mit dem Gehäuse elektrisch leitend verbindet,
**dadurch gekennzeichnet,**
**dass** das Verbindungsmittel ringförmig ausgebildet ist und mindestens einen Fortsatz umfasst, der an die Außenseite des Ringes angeformt ist.

2. Elektrochemisches Element nach Anspruch 1, **dadurch gekennzeichnet, dass** sein Gehäuse im Wesentlichen zylindrisch ausgebildet ist.

3. Elektrochemisches Element nach Anspruch 1 oder Anspruch 2, **dadurch gekennzeichnet, dass** zumindest ein Teil der ersten Elektrode, gegebenenfalls die ganze Elektrode, als Hohlzylinder ausgebildet ist.

4. Elektrochemisches Element nach einem der Ansprüche 1 bis 3, **dadurch gekennzeichnet, dass** die erste Elektrode mindestens ein scheibenförmiges und mindestens ein ringförmiges Einzelsegment mit jeweils gleichem Außendurchmesser umfasst.

5. Elektrochemisches Element nach einem der vorhergehenden Ansprüche, **dadurch gekennzeichnet, dass** die erste Elektrode mindestens zwei ringförmige Einzelsegmente mit jeweils gleichem Außen- und Innendurchmesser umfasst.

6. Elektrochemisches Element nach einem der Ansprüche 3 bis 5, **dadurch gekennzeichnet, dass** zumindest der als Hohlzylinder ausgebildete Teil der ersten Elektrode aus einem oder mehreren gestapelt vorliegenden ringförmigen Einzelsegmenten mit jeweils gleichem Außen- und Innendurchmesser besteht.

7. Elektrochemisches Element nach einem der Ansprüche 4 bis 6, **dadurch gekennzeichnet, dass** die Kontaktflächen, in denen die Einzelsegmente flächig aneinandergrenzen, durch die Außen- und Innendurchmesser der ringförmigen Einzelsegmente definiert sind.

8. Elektrochemisches Element nach einem der vorhergehenden Ansprüche, **dadurch gekennzeichnet, dass** der Hohlraum innerhalb der ersten Elektrode im Wesentlichen zylindrisch ausgebildet ist.

9. Elektrochemisches Element nach einem vorhergehenden Ansprüche, **dadurch gekennzeichnet, dass** es als Verbindungsmittel ein Verbindungsmittel aus Metall, insbesondere eine Metall-Folie oder ein Metall-Blech, umfasst.

10. Elektrochemisches Element nach einem der vorhergehenden Ansprüche, **dadurch gekennzeichnet, dass** der Außen- und/ oder Innendurchmesser des mindestens einen ringförmigen Verbindungsmittels dem Außen- und/oder Innendurchmesser der ringförmigen Einzelsegmente entspricht.

11. Elektrochemisches Element nach einem der vorhergehenden Ansprüche, **dadurch gekennzeichnet, dass** das ringförmige Verbindungsmittel mindestens einen streifenförmigen Fortsatz umfasst, der an die Außenseite des Ringes angeformt ist.

12. Elektrochemisches Element nach einem vorhergehenden Ansprüche, **dadurch gekennzeichnet, dass** die erste Elektrode die positive Elektrode und die zweite Elektrode die negative Elektrode ist.

13. Elektrochemisches Element nach Anspruch 12, **dadurch gekennzeichnet, dass** es sich der bei positiven Elektrode um eine Braunstein-Elektrode und bei der negativen Elektrode um eine ZinkElektrode handelt.

## Claims

1. An electrochemical element, comprising
• a housing having an inside surface,
• a first electrode resting on an inside surface of the housing and defining a cavity,
• a second electrode of opposite polarity arranged inside the cavity, and
• a separator arranged between the first and second electrodes,
wherein the first electrode is composed of at least two individual segments adjacent to one another in a two-dimensional manner via first contact surfaces and rest via further contact surfaces on the inside surface of the housing, and wherein at least one connector means is arranged between the first contact surfaces which interconnects the segments in an electrically conducting manner and which extends as far as into the contact region between the further contact surfaces of the segments and the inside surface of the housing and connects the segments in an electrically conducting manner to the housing,
**characterized in that**
the connector means is annular or ring-shaped and comprises at least one projection formed on the exterior of the ring.

2. The electrochemical element according to claim 1, **characterized in that** its housing is of substantially cylindrical construction.

3. The electrochemical element according to claim 1 or claim 2, **characterized in that** at least part of the first electrode, optionally the entire electrode, takes the form of a hollow cylinder.

4. The electrochemical element according to any one of the claims 1 to 3, **characterized in that** the first electrode comprises at least one disk-shaped and at least one annular individual segment of in each case identical outer diameter.

5. The electrochemical element according to any one of the preceding claims, **characterized in that** the first electrode comprises at least two annular individual segments of in each case identical outer and inner diameter.

6. The electrochemical element according to any one of the claims 3 to 5, **characterized in that** at least the part of the first electrode in the form of a hollow cylinder consists of one or more stacked annular individual segments of in each case identical outer and inner diameter.

7. The electrochemical element according to any one of the claim 4 to 6, **characterized in that** the contact surfaces, at which the individual segments are adjacent to one another in a two-dimensional manner, are defined by the outer and inner diameters of the annular individual segments.

8. The electrochemical element according to any one of the preceding claims, **characterized in that** the cavity inside the first electrode is substantially cylindrical.

9. The electrochemical element according to any one of the preceding claims, **characterized in that** it comprises as connector means a connector means made of metal, in particular a metal foil or a metal sheet.

10. The electrochemical element according to any one of the preceding claims, **characterized in that** the outer and/or inner diameters of the at least one annular connector means corresponds to the outer and/or inner diameter of the annular individual segments.

11. The electrochemical element according to any one of the preceding claims, **characterized in that** the annular connector means comprises at least one strip-shaped projection formed on the exterior of the ring.

12. The electrochemical element according to any one of the preceding claims, **characterized in that** the first electrode is the positive electrode and the second electrode is the negative electrode.

13. The electrochemical element according to claim 12, **characterized in that** the positive electrode is a manganese dioxide electrode and the negative electrode is a zinc electrode.

## Revendications

1. Élément électrochimique, comprenant :
- un boîtier avec un côté intérieur,
- une première électrode s'appliquant contre le côté intérieur du boîtier, laquelle définit une cavité,
- une deuxième électrode de polarité opposée, qui est disposée à l'intérieur de la cavité et
- un séparateur disposé entre la première et la deuxième électrode,
la première électrode se composant d'au moins deux segments individuels qui sont adjacents à plat par le biais de premières surfaces de contact et qui s'appliquent par le biais de surfaces de contact supplémentaires contre le côté intérieur du boîtier, au moins un moyen de connexion étant disposé entre les premières surfaces de contact, lequel relie de manière électriquement conductrice les segments les uns avec les autres et s'étend jusque dans la région de contact entre les surfaces de contact supplémentaires des segments et le côté intérieur du boîtier et relie de manière électriquement conductrice les segments au boîtier,
**caractérisé en ce que**
le moyen de connexion est réalisé sous forme annulaire et comprend au moins une saillie qui est façonnée sur le côté extérieur de la bague.

2. Élément électrochimique selon la revendication 1, **caractérisé en ce que** son boîtier est réalisé sous forme essentiellement cylindrique.

3. Élément électrochimique selon la revendication 1 ou la revendication 2, **caractérisé en ce qu'**au moins une partie de la première électrode, éventuellement l'ensemble de l'électrode, est réalisée sous forme de cylindre creux.

4. Élément électrochimique selon l'une quelconque des revendications 1 à 3, **caractérisé en ce que** la première électrode comprend au moins un segment individuel en forme de disque et au moins un segment individuel de forme annulaire ayant chacun le même diamètre extérieur.

5. Élément électrochimique selon l'une quelconque des revendications précédentes, **caractérisé en ce que** la première électrode comprend au moins deux segments individuels de forme annulaire ayant chacun le même diamètre intérieur et le même diamètre extérieur.

6. Élément électrochimique selon l'une quelconque des revendications 3 à 5, **caractérisé en ce qu'**au moins la partie de la première électrode réalisée sous forme de cylindre creux se compose d'un ou de plusieurs segments individuels de forme annulaire se présentant sous forme empilée ayant chacun le même diamètre extérieur et le même diamètre intérieur.

7. Élément électrochimique selon l'une quelconque des revendications 4 à 6, **caractérisé en ce que** les surfaces de contact dans lesquelles les segments individuels sont adjacents à plat sont définies par les diamètres extérieurs et intérieurs des éléments individuels de forme annulaire.

8. Élément électrochimique selon l'une quelconque des revendications précédentes, **caractérisé en ce que** la cavité à l'intérieur de la première électrode est réalisée sous forme essentiellement cylindrique.

9. Élément électrochimique selon l'une quelconque des revendications précédentes, **caractérisé en ce qu'**il comprend, en tant que moyen de connexion, un moyen de connexion en métal, en particulier une feuille de métal ou une tôle de métal.

10. Élément électrochimique selon l'une quelconque des revendications précédentes, **caractérisé en ce que** le diamètre extérieur et/ou intérieur de l'au moins un moyen de connexion de forme annulaire correspond au diamètre extérieur et/ou intérieur des éléments individuels de forme annulaire.

11. Élément électrochimique selon l'une quelconque des revendications précédentes, **caractérisé en ce que** le moyen de connexion de forme annulaire comprend au moins une saillie en forme de bande qui est façonnée sur le côté extérieur de la bague.

12. Élément électrochimique selon l'une quelconque des revendications précédentes, **caractérisé en ce que** la première électrode est l'électrode positive et la deuxième électrode est l'électrode négative.

13. Élément électrochimique selon la revendication 12, **caractérisé en ce que** l'électrode positive est une électrode de dioxyde de manganèse (MnO₂) et l'électrode négative est une électrode en zinc.
